# EUROPÄISCHE PATENTSCHRIFT

(11) **EP 1 385 721 B1**
(45) Veröffentlichungstag und Bekanntmachung des Hinweises auf die Patenterteilung: **05.04.2006**
(21) Anmeldenummer: 02740283.3
(22) Anmeldetag: 23.04.2002
(51) Int. Cl.: B60R 25/00, G01S 13/56, G08B 25/10

(54) **SCHALTUNGSANORDNUNG UND ZUGEHÖRIGES VERFAHREN**
CIRCUIT ARRANGEMENT AND CORRESPONDING METHOD
CIRCUIT ET PROCEDE ASSOCIE

(30) Priorität: 26.04.2001 DE 10120458
(43) Veröffentlichungstag der Anmeldung: 04.02.2004
(73) Patentinhaber: ROBERT BOSCH GMBH, 70442 Stuttgart (DE)
(72) Erfinder: KRAMP, Wolfgang, 71254 Ditzingen (DE); WAGNER, Arndt, 71735 Eberdingen (DE); SPICHALE, Thomas, 69436 Schoenbrunn (DE)
(86) Internationale Anmeldenummer: PCT/DE2002/001481
(87) Internationale Veröffentlichungsnummer: WO 2002/087932

(56) Entgegenhaltungen:
- US-A- 4 761 813

## Beschreibung

### Technisches Gebiet

Die vorliegende Erfindung betrifft das Gebiet der Schaltungsanordnungen sowie der Verfahren zum Austauschen von Daten und Informationen.

### Stand der Technik

In einem Innenraum, insbesondere im Innenraum eines Fortbewegungsmittels, ist konventionellerweise eine Kommunikationseinrichtung zum Austauschen von Daten und Informationen mit mindestens einem im Innenraum betreibbaren, mindestens eine Mikrowellenschnittstelle aufweisenden Datenverarbeitungsgerät oder Telekommunikationsgerät angeordnet. Des weiteren weist eine Vielzahl von Innenräumen, insbesondere von Fahrzeuginnenräumen, heutzutage aus Sicherheitsgründen eine Überwachungseinrichtung zum Überwachen des Innenraums, insbesondere zum Detektieren von Objektbewegungen im Innenraum, auf.

In diesem Zusammenhang handelt es sich bei der Kommunikationseinrichtung und bei der Überwachungseinrichtung um separate, voneinander unabhängig angeordnete Sensorgerätschaften; dies ist aufgrund des damit verbundenen Bedarfs an Elektronik nicht nur aufwendig und kostspielig, sondern zeitigt auch einen erhöhten Platzsowie Wartungsbedarf.

Die Schaltengsanordnung gemäß dem Oberbegriff von Anspruch 1 bzw. das Verfahren gemäß dem Oberbegriff von Anspruch 5 sind all gemein im Stand der Technik bekannt.

### Darstellung der Erfindung: Aufgabe, Lösung, Vorteile

Ausgehend von den vorstehend dargelegten Nachteilen und Unzulänglichkeiten liegt der vorliegenden Erfindung die Aufgabe zugrunde, eine Schaltungsanordnung sowie ein Verfahren der eingangs genannten Art zur Verfügung zu stellen, mit denen der sowohl für eine Kommunikationseinrichtung zum Austauschen von Daten und Informationen als auch für eine Überwachungseinrichtung zum Überwachen des Innenraums erforderliche Platz erheblich reduziert werden kann. Des weiteren zielt die vorliegende Erfindung auf die Möglichkeit ab, die mit den vorgenannten Funktionen verbundenen Kosten sowie den diesbezüglichen Aufwand zu reduzieren. Schließlich sollen durch die vorliegende Erfindung auch notwendige Wartungsintervalle verlängert werden.

Diese Aufgabe wird durch eine Schaltungsanordnung mit den im Anspruch 1 angegebenen Merkmalen sowie durch ein Verfahren mit den im Anspruch 5 angegebenen Merkmalen gelöst. Vorteilhafte Ausgestaltungen und zweckmäßige Weiterbildungen der vorliegenden Erfindung sind in den jeweiligen Unteransprüchen gekennzeichnet.

Gemäß der Lehre der vorliegenden Erfindung wird durch die Schaltungsanordnung, die insbesondere als Chipanordnung ausgebildet sein kann, sowie durch das Verfahren der Innenraum, insbesondere der Innenraum eines Fortbewegungsmittels, unter Anwendung einer für geringe Distanzen ausgelegten Funkübertragungstechnik überwacht. In diesem Zusammenhang wird der Fachmann insbesondere zu schätzen wissen, daß
- nicht nur die Funktion des Überwachens des Innenraums, insbesondere des Detektierens von Objektbewegungen im Innenraum,
- sondern auch die Funktion des auf Funkübertragung über kurze Entfernungen basierenden Austauschens von Daten und Informationen mit mindestens einem im Innenraum betreibbaren Datenverarbeitungsgerät oder Telekommunikationsgerät
in Gestalt der vorliegenden Schaltungsanordnung sowie in Form des vorliegenden Verfahrens auf überzeugende Weise integriert, das heißt zusammengeführt und kombiniert ist.

Zum Realisieren der Funkübertragung über kurze Entfernungen weist das Datenverarbeitungsgerät, das beispielsweise als mindestens ein Laptop, als mindestens ein Notebook, als mindestens ein elektronischer Organizer, als mindestens ein Personal Computer (PC), als mindestens ein Personal Digital Assistant (PDA) oder dergleichen ausgebildet ist, oder das Telekommunikationsgerät, das beispielsweise als mindestens ein Handy, als mindestens ein Mobiltelephon oder dergleichen ausgebildet ist, gemäß einer bevorzugten Ausführungsform mindestens eine Mikrowellenschnittstelle, insbesondere mindestens eine Bluetooth-Schnittstelle, auf.

Eine derartige Ausführungsform korrespondiert in günstiger Weise mit einer vorteilhaften Ausgestaltungsform, bei der die Schaltungsanordnung gemäß der vorliegenden Erfindung mindestens eine Mikrowellensendeeinheit, insbesondere auf Basis des Bluetooth-Standards, zum Aussenden von Mikrowellen sowie mindestens eine Mikrowellenempfangseinheit, ebenfalls insbesondere auf Basis des Bluetooth-Standards, zum Empfangen der im Innenraum, insbesondere an einem im Innenraum bewegten Objekt, reflektierten und/oder gestreuten Mikrowellen aufweist.

Hierdurch wird nicht nur ein geringer Elektronikaufwand, verbunden mit entsprechend großzügig bemeßbaren Wartungsintervallen ermöglicht, sondern es sind auch entsprechende Kosteneinsparungen möglich, durch die die internationale Wettbewerbsfähigkeit des vorliegenden Produkts gestärkt wird. In diesem Zusammenhang kann es von Vorteil sein, die Mikrowellensendeeinheit und die Mikrowellenempfangseinheit zumindest partiell einheitlich und/oder zumindest partiell einstückig und/oder zumindest partiell in integrierter Form auszubilden und hierbei beispielsweise in Form mindestens eines Dachmoduls auf Bluetooth-Basis zusammenzufassen.

Im Betrieb werden die von der Mikrowellensendeeinheit ausgesendeten Mikrowellensignale mit den empfangenen Echosignalen in einer zugeordneten Auswerteeinheit verglichen und korreliert; stellt sich hierbei eine zu große Abweichung des Musters der empfangenen Mikrowellensignale ein, so ist davon auszugehen, daß es im Innenraum zu einer Beeinflussung durch ein bewegtes Objekt, etwa durch die Hand eines Diebes im Innenraum eines Fortbewegungsmittels, gekommen ist. In diesem Falle kann eine - beispielsweise per serieller Datenleitung (Busverbindung) mit der Innenraumüberwachung verbundene - Alarmsirene oder eine andere Signalanlage ausgelöst werden.

Auch wird durch die vorliegende Erfindung eine gemeinsame Nutzung der vorbeschriebenen Hochfrequenz-Schaltungsteile sowie der Auswerteelektronik sowohl durch die per Mikrowellen, insbesondere mittels Bluetooth, ansprechbaren mobilen Datenverarbeitungsgeräte bzw Telekommunikationsgeräte ermöglicht, wobei ein Einsatz beispielsweise in allen Fortbewegungsmitteln möglich ist, die zumindest über eine mobile Grundanwendung (etwa Laptop, Notebook, elektronischer Organizer, Personal Computer (PC), Personal Digital Assistant (PDA) oder Handy, Mobiltelephon) mit Bluetooth-Schnittstelle verfügen. In diesem Zusammenhang besteht die erfindungswesentliche Option, die Funktion des Überwachens des Innenraums, und hierbei insbesondere die Funktion des Detektierens von Bewegungen im Innenraum, zumindest partiell "softwaremäßig", das heißt zumindest partiell mittels mindestens eines elektronischen Datenverarbeitungsprogramms in der Schaltungsanordnung zu implementieren.

Gemäß einer erfindungswesentlichen Option kann die Übertragungsrate für das Austauschen der Daten und Informationen bis zu etwa 721 Kilobit pro Sekunde und pro Richtung betragen. Hierbei können die zu übertragenden Daten und Informationen gemäß dem Bluetooth-Standard in kleine Pakete "zerhackt" und auf insgesamt bis zu etwa 79 verfügbaren Kanälen verschickt werden. Ist hierbei eines dieser Pakete versendet, so wird für die nächste "Paketladung" per Zufallsprinzip auf einen anderen Kanal gewechselt; bis zu insgesamt etwa 1.600 mal pro Sekunde kann ein derartiger Kanalwechsel in Form des sogenannten "frequency hopping" stattfinden, so daß mehrere Übertragungen von Daten und Informationen parallel ablaufen können, weil keiner der Kanäle dauerhaft belegt ist.

In diesem Zusammenhang ist als besonderer Vorzug der vorliegenden Erfindung herauszustellen, daß die "frequency hopping"-Funktion von Bluetooth auch im Diebstahlwarnanlagenmodus zum Einsatz gelangen kann, um eventuellen Fehldetektionen vorzubeugen. Auch bietet das "frequency hopping"-Verfahren im Falle von "radio jamming" (= Belegung einer bestimmten Frequenz durch einen anderen Sender, in diesem Falle durch den lnnenraumüberwachungssender) die zusätzliche Möglichkeit, eine Ausweichfrequenz zum Einsatz zu bringen.

Zum optimalen Realisieren der vorgenannten Ziele ist eine möglichst zentrale Plazierung des Sender/Empfänger-Systems sachdienlich, damit der komplette Innenraum abgedeckt werden kann; dies bedeutet mit anderen Worten, daß die Positionierung des sowohl die Mikrowellensendeeinheit als auch die Mikrowellenempfangseinheit enthaltenden Bauteils im Innenraum so vorgenommen werden sollte, daß eine Innenraumabdeckung - im Sinne einer vollständigen Erfassung des Innenraums - sowohl für die Kommunikation mit sämtlichen sich im Innenraum befindlichen Datenverarbeitungsgeräten und/oder Telekommunikationsgeräten als auch für die insbesondere als Diebstahlwarnanlage ausgebildete Signalanlage stets gewährleistet ist.

Hierzu kann etwa eine Positionierung der Schaltungsanordnung im sogenannten "Dachhimmel" in der Mitte des Dachs des Fortbewegungsmittels gewählt werden; allgemeiner gesprochen heißt dies, daß die Schaltungsanordnung zweckmäßigerweise in einem oberen Bereich und/oder in einem zentralen Bereich, insbesondere im zentralen Deckenbereich, des Innenraums angeordnet ist.

Gemäß einer besonders vorteilhaften Weiterbildung der vorliegenden Erfindung gelangt im exemplarischen Falle eines fahrenden und geöffneten Fortbewegungsmittels die Kommunikationsoption unter Einsatz der gleichen Funkstrecke wie bei der Überwachungsfunktion und unter Nutzung der Mikrowellensignalfunktion, das heißt insbesondere der Bluetooth-Funktion, zum Einsatz.

Hingegen arbeiten im exemplarischen Falle eines abgestellten und abgeschlossenen Fortbewegungsmittels sowohl die - auch als "TX"(-Einheit) bezeichnete - Mikrowellensendeeinheit als auch die - auch als "RX"(-Einheit) bezeichnete - Mikrowellenempfangseinheit mit aktivierter Diebstahlwarnanlage als Innenraumüberwachungseinrichtung, und zwar zur Schonung der Spannungsversorgung, etwa der Batterie des Fortbewegungsmittels, im Pulsbetrieb.

In diesem Zusammenhang kann bei der Schaltungsanordnung gemäß der vorliegenden Erfindung verfahrensmäßig beispielsweise ein Pulsechobetrieb oder ein Betrieb gemäß dem Doppler-Prinzip zum Einsatz gelangen, wobei sowohl der Pulsechobetrieb wie auch der Betrieb gemäß dem Doppler-Prinzip die Detektion eines bewegten Objekts im Innenraum des Fortbewegungsmittels gewährleistet, ohne daß Luftbewegungen oder dergleichen einen störenden Einfluß ausüben.

Hierbei sollte nicht übersehen werden, daß im speziellen bei der - hier gegebenen - Anwendung von Frequenzen im Gigahertz-Bereich die Reichweite der Wirkungen der vorliegenden Erfindung tatsächlich auch auf den Innenraum begrenzt werden, um die Wahrscheinlichkeit von Fehldetektionen in signifikanter Weise zu reduzieren; dies bedeutet mit anderen Worten, daß Fehlfunktionen, das heißt Detektionen außerhalb des Innenraums, durch die vorgeschilderten Modifikationsmöglichkeiten wie auch durch die Adaption der Sendeleistung vorgebeugt werden kann.

In diesem Zusammenhang wird die Sendeleistung der Mikrowellensendeeinheit zweckmäßigerweise durch die jeweilige Applikation im Innenraum bestimmt bzw. ermittelt. So sind im Falle des Einsatzes von Frequenzen im Mikrowellenbereich beispielsweise (Sende-)Leistungen im Milliwatt-Bereich (mW-Bereich) durchaus ausreichend; generell sollte in der jeweiligen Applikation relativ streng darauf geachtet werden, daß die Sendeleistung der Mikrowellensendeeinheit auf den Innenraum beschränkt bleibt, um Bewegungen außerhalb des Innenraums nicht zu detektieren und auf diese Weise Fehlalarme nach Möglichkeit auszuschließen; demzufolge sollte die Leistung der Mikrowellensendeeinheit zweckmäßigerweise derart einstellbar sein, daß die Reichweite der Mikrowellen auf den Innenraum begrenzt ist.

Gemäß einer bevorzugten Ausgestaltungsform der vorliegenden Erfindung ist die Funktion der Innenraumüberwachung über eine insbesondere serielle oder insbesondere drahtlose Datenleitung mit mindestens einer Signalanlage, insbesondere mit mindestens einer Alarmsirene, verbunden. In mehreren einander ergänzenden oder zueinander alternativen Optionen ist die Signalanlage über eine Nachricht von der Innenraumüberwachung und/oder über eine Unterbrechung der Busverbindung bzw. Datenleitung und/oder mittels weiterer Signale, wie etwa mittels von einem- (Neigungs-)Sensor kommender Daten und Informationen, auslösbar.

Vorstellbar ist in diesem Zusammenhang auch ein System mit der Möglichkeit des Auslösens eines sogenannten "remote"-Alarms, beispielsweise einer Meldung über das GSM-Mobiltelephon (GSM = Global System for Mobile communication) mit einer GPS-Positionsangabe (GPS = Global Positioning System).

Zusammenfassend kann mithin festgestellt werden, daß die vorliegende Erfindung die Nutzung eines Bluetooth-"physical layer"-Standards zum Überwachen des Innenraums insbesondere eines Fortbewegungsmittels vorschlägt. Hierzu wird mindestens ein Mikrowellenschaltteil mit Senderanteil ("TX") und mit Empfängeranteil ("RX") von Bluetooth herangezogen, das zweckmäßigerweise zentral, beispielsweise im Dachhimmel eines Innenraums eines Fortbewegungsmittels, angeordnet werden sollte, um zum einen die Kommunikation mit den Fahrzeug-"Infotainment"elementen, wie etwa Personal Computer (PC), Personal Digital Assistant (PDA) oder Mobiltelephon, durchzuführen und zum anderen die Innenraumüberwachung zu gewährleisten.

### Kurze Beschreibung der Zeichnungen

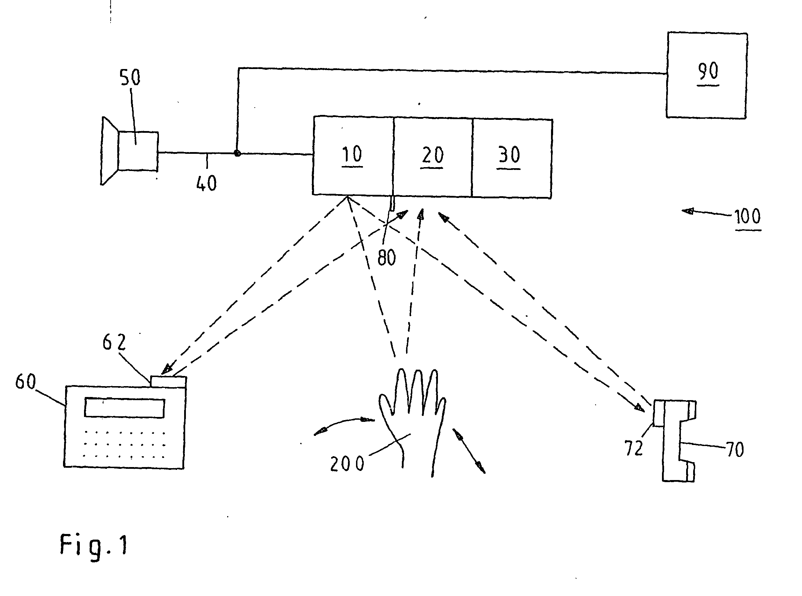

Weitere Ausgestaltungen, Merkmale und Vorteile der vorliegenden Erfindung werden nachstehend anhand des durch Figur 1 veranschaulichten Ausführungsbeispiels näher erläutert.

Es zeigt:
- Fig. 1: ein Ausführungsbeispiel einer Schaltungsanordnung gemäß der vorliegenden Erfindung, in schematischer Prinzipdarstellung.

### Bester Weg zur Ausführung der Erfindung

Das anhand Figur 1 veranschaulichte Ausführungsbeispiel einer integrierten Schaltungsanordnung 100 in Form einer Chipanordnung gemäß der vorliegenden Erfindung ist zur Anordnung im zentralen Deckenbereich eines Innenraums eines Fortbewegungsmittels vorgesehen und ist
sowohl für das Austauschen von Daten und Informationen mit einem im Fahrzeuginnenraum betreibbaren, eine Bluetooth-Schnittstelle 62 aufweisenden Datenverarbeitungsgerät 60 in Form eines Personal Digital Assistant (--> "gestrichelte" Funk-Datenleitung zwischen einem Bluetooth-Dachmodul 10, 20 und dem Datenverarbeitungsgerät 60)
als auch für das Austauschen von Daten und Informationen mit einem im Fahrzeuginnenraum betreibbaren, ebenfalls eine Bluetooth-Schnittstelle 72 aufweisenden Telekommunikationsgerät 70 in Form eines Mobiltelephons (--> "gestrichelte" Funk-Datenleitung zwischen dem Bluetooth-Dachmodul 10, 20 und dem Telekommunikationsgerät 70)
als auch für das Überwachen des Fahrzeuginnenraums, und hierbei im speziellen für das Delektieren von Objektbewegungen im Fahrzeuginnenraum (--> Überwachungssignal, das heißt "gestrichelte" Funk-Datenleitung zwischen einem Bluetooth-Dachmodul 10, 20 und der Hand 200 eines Diebes im Fahrzeuginnenraum, wobei die zu detektierenden Bewegungen der Hand 200 durch Doppelpfeile angedeutet sind),
ausgelegt; mithin liegt ein kombinierter Aufbau der Schaltungsanordnung 100 vor, die sowohl Bluetooth-Komponenten als auch Komponenten zum Überwachen des Fahrzeuginnenraums aufweist.

Hierzu weist die Schaltungsanordnung 100 neben einer erfindungswesentlichen Antenneneinheit (= Miniantenne 80) eine Mikrowellensendeeinheit 10 zum Aussenden von Mikrowellen auf Basis des Bluetooth-Standards sowie eine Mikrowellenempfangseinheit 20 zum Empfangen der im Fahrzeuginnenraum, insbesondere an einem im Fahrzeuginnenraum bewegten Objekt 200, reflektierten und gestreuten Mikrowellen ebenfalls auf Basis des Bluetooth-Standards auf. Aus Gründen der Übersichtlichkeit der Darstellung ist hierbei in Figur 1 nicht explizit gezeigt, daß zwischen der Mikrowellensende-/-empfangseinheit 10, 20 und dem Fahrzeug selbst eine Verbindung in Form einer Datenleitung besteht.

Des weiteren ist eine Auswerteeinheit 30 zum Auswerten der empfangenen Mikrowellen und zum Auslösen eines über eine serielle Datenleitung 40 an eine Diebstahlwarnanlage 50 gerichteten Alarmsignals für den Fall vorgesehen, daß das Muster der empfangenen Mikrowellen über ein bestimmtes Maß hinaus vom Muster der ausgesendeten Mikrowellen abweicht.

In Ergänzung hierzu ist das Benachrichtigungssignal auch durch eine Neigungssensoreinheit 90 auslösbar oder durch Unterbrechen der Datenleitung 40 zwischen der Auswerteeinheit 30 und der Signalanlage 50 auslösbar.

Das Ausführungsbeispiel der vorliegenden Erfindung gemäß Figur 1 basiert unter anderem darauf, daß die Funktion des Austauschens der Daten und Informationen mit dem mindestens einen Datenverarbeitungsgerät 60 und mit dem Telekommunikationsgerät 70 im Betriebs- und Öffnungszustand des Fahrzeugs aktiviert ist; hingegen ist die Funktion des Überwachens des Fahrzeuginnenraums, insbesondere des Detektierens von Objektbewegungen (--> Hand 200 eines Diebes im Fahrzeuginnenraum), im Ruhe- und Schließzustand des Fahrzeugs aktiviert.

Nicht zuletzt mittels der Antenneneinheit 80 ist die Leistung der Mikrowellensendeeinheit 10 derart einstellbar ist, daß die Reichweite der Mikrowellen auf den Fahrzeuginnenraum begrenzt ist und daß dementsprechend die Leistung der Mikrowellensendeeinheit 10 im Milliwatt-Bereich (mW-Bereich) liegt; in Korrespondenz hierzu liegt die Frequenz der Mikrowellen im Gigahertz-Bereich (GHz-Bereich), insbesondere in der Größenordnung von 2,4 GHz, im speziellen im 2,45 GHz-ISM-Band (ISM = Industrial, Scientific, Medical).

Gemäß dem Bluetooth-Prinzip des sogenannten "frequency hopping" stehen bei der integrierten Schaltungsanordnung 100 gemäß dem Ausführungsbeispiel bis zu 79 Kanäle sowohl für das Austauschen der Daten und Informationen als auch für das Auslösen des Benachrichtigungssignals zur Verfügung. Hierbei kann ein permanenter Kanalwechsel (sogenanntes "frequency hopping") sowohl für das Austauschen der Daten und Informationen als auch für das Auslösen des Benachrichtigungssignals mit einer Frequenz von bis zu etwa 1,6 Kilohertz erfolgen.

## Patentansprüche

1. Zur Anordnung in einem Innenraum, insbesondere im Innenraum eines Fortbewegungsmittels, vorgesehene integrierte Schaltungsanordnung (100), die sowohl für das auf Funkübertragung über kurze Entfernungen basierende Austauschen von Daten und Informationen mit mindestens einem im Innenraum betreibbaren Datenverarbeitungsgerät (60) oder Telekommunikationsgerät (70) als auch für das Überwachen des Innenraums, insbesondere für das Detektieren von Objektbewegungen im Innenraum, ausgelegt ist, **dadurch gekenzeichnet, dass** eine gemeinsame Nutzung einer Mikrowellensendeeinheit (10) zum Senden von Funksignalen und einer Mikrowellenempfangseinheit (20) zum Empfangen von Funksignalen durch Daten- und Informationsaustausch sowie Innenraumüberwachung vorgesehen ist.

2. Schaltungsanordnung (100) gemäß Anspruch 1, **dadurch gekennzeichnet, daß** die Schaltungsanordnung (100)
- mindestens eine Mikrowellensendeeinheit (10) zum Aussenden von Mikrowellen,
- mindestens eine Mikrowellenempfangseinheit (20) zum Empfangen der im Innenraum, insbesondere an einem im Innenraum bewegten Objekt (200), reflektierten und/oder gestreuten Mikrowellen sowie
- mindestens eine Auswerteeinheit (30)
-- zum Auswerten der empfangenen Mikrowellen, insbesondere zum Vergleichen und Korrelieren der empfangenen. Mikrowellen mit den ausgesendeten Mikrowellen, und
-- zum Auslösen mindestens eines Benachrichtigungssignals, insbesondere mindestens eines über mindestens eine insbesondere serielle oder insbesondere drahtlose Datenleitung (40) an mindestens eine Signalanlage (50) gerichteten Alarmsignals, wenn das Muster der empfangenen Mikrowellen über ein bestimmtes Maß hinaus vom, Muster der ausgesendeten Mikrowellen abweicht,
aufweist.

3. Schaltungsanordnung (100) gemäß Anspruch 2, **dadurch gekennzeichnet, daß** die Signalanlage (50) als mindestens eine Diebstahlwarnanlage ausgebildet ist.

4. Schaltungsanordnung (100) gemäß mindestens einem der Ansprüche 1 bis 3, **dadurch gekennzeichnet,**
- **daß** die Funktion des Austauschens der Daten und Informationen mit dem mindestens einen Datenverarbeitungsgerät (60) oder Telekommunikationsgerät (70) im Betriebszustand des Fortbewegungsmittels und/oder im Öffnungszustand des Fortbewegungsmittels aktiviert ist und
- **daß** die Funktion des Überwachens des Innenraums, insbesondere des Detektierens von Objektbewegungen im Innenraum, im Ruhezustand des Fortbewegungsmittels und/oder im Schließzustand des Fortbewegungsmittels aktiviert ist.

5. Verfahren sowohl zum auf Funkübertragung über'kurze Entfernungen basierenden Austauschen von Daten und Informationen mit mindestens einem in einem Innenraum, insbesondere im Innenraum eines Fortbewegungsmittels, betreibbaren Datenverarbeitungsgeräts (60) oder Telekommunikationsgerätes (70) als auch zum Überwachen des Innenraums, insbesondere zum Detektieren von Objektbewegungen im Innenraum, **dadurch gekennzeichnet, daß** der Daten- und Informationsaustausch sowie die Innenraumüberwachung eine Mikrowellensendeeinheit (10) zum Senden von Funksignalen und eine Mikrowellenempfangseinheit (20) zum Empfangen von Funksignalen gemeinsam nutzen.

6. Verfahren gemäß Anspruch 5, **gekennzeichnet durch** die folgenden Schritte:
(a) Aussenden von Mikrowellen mittels mindestens, einer Mikrowellensendeeinheit (10);
(b) Empfangen der im Innenraum, insbesondere an einem im Innenraum bewegten Objekt (200), reflektierten und/oder gestreuten Mikrowellen mittels mindestens einer Mikrowellenempfangseinheit (20);
(c.1) Auswerten der empfangenen Mikrowellen, insbesondere Vergleichen und Korrelieren der empfangenen Mikrowellen mit den ausgesendeten Mikrowellen, und
(c.2) Auslösen mindestens eines Benachrichtigungssignals, insbesondere mindestens eines über mindestens eine insbesondere serielle oder insbesondere drahtlose Datenleitung (40) an mindestens eine Signalanlage (50) gerichteten Alarmsignals, wenn das Muster der empfangenen Mikrowellen über ein bestimmtes. Maß hinaus vom Muster der ausgesendeten Mikrowellen abweicht,
mittels mindestens einer Auswerteeinheit (30)

7. Verfahren gemäß Anspruch 6, **dadurch gekennzeichnet, daß** sowohl die Daten und Informationen auf bis zu etwa 79 Kanälen ausgetauscht werden als auch das Benachrichtigungssignal auf diesen bis zu etwa 79 Kanälen ausgelöst wird.

8. Verfahren gemäß Anspruch 6 oder 7, **dadurch gekennzeichnet, daß** sowohl beim Austauschen der Daten und Informationen als auch beim Auslösen des Benachrichtigungssignals ein Kanalwechsel (sogenanntes "frequency hopping") mit einer Frequenz von bis zu etwa 1,6 Kilohertz erfolgt.

9. Verfahren gemäß mindestens einem der Ansprüche 6 bis 8, **dadurch gekennzeichnet, daß** das Benachrichtigungssignal
- durch Unterbrechen der Datenleitung (40) zwischen der Auswerteeinheit (30) und der Signalanlage (50) und/oder
- durch mindestens eine Sensoreinheit (90), insbesondere durch mindestens eine Neigungssensoreinheit,
- ausgelöst wird.

10. Verfahren gemäß mindestens einem der Ansprüche 5 bis 9, **gekennzeichnet durch** einen Pulsbetrieb, insbesondere **durch** einen Pulsechobetrieb oder **durch** ein Betreiben gemäß dem Doppler-Prinzip.

## Claims

1. Integrated circuit arrangement (100) which is provided for arrangement in an interior, particularly in the interior of a means of locomotion, and which is designed both for interchanging data and information with at least one data processing appliance (60) or telecommunication appliance (70), which can be operated in the interior, on the basis of radio transmission over short distances and for monitoring the interior, particularly for detecting movements by objects in the interior, **characterized in that** provision is made for joint use of a microwave transmission unit (10) for transmitting radio signals and of a microwave reception unit (20) for receiving radio signals through data and information interchange and also interior monitoring.

2. Circuit arrangement (100) according to Claim 1, **characterized in that** the circuit arrangement (100) has
- at least one microwave transmission unit (10) for transmitting microwaves,
- at least one microwave reception unit (20) for receiving the microwaves reflected and/or scattered in the interior, particularly at an object (200) moving in the interior, and also
- at least one evaluation unit (30)
-- for evaluating the received microwaves, particularly for comparing and correlating the received microwaves with the transmitted microwaves, and
-- for triggering at least one notification signal, particularly at least one alarm signal sent via at least one, in particular serial or in particular wireless, data line (40) to at least one signal installation (50), when the pattern of the received microwaves differs from the pattern of the transmitted microwaves by more than a particular degree.

3. Circuit arrangement (100) according to Claim 2, **characterized in that** the signal installation (50) is in the form of at least one theft warning installation.

4. Circuit arrangement (100) according to at least one of Claims 1 to 3, **characterized**
- **in that** the function of interchanging the data and information with the at least one data processing appliance (60) or telecommunication appliance (70) is activated in the operating state of the means of locomotion and/or in the open state of the means of locomotion, and
- **in that** the function of monitoring the interior, particularly of detecting movements by objects in the interior, is activated in the resting state of the means of locomotion and/or in the closed state of the means of locomotion.

5. Method both for interchanging data and information with at least one data processing appliance (60) or telecommunication appliance (70), which can be operated in an interior, particularly in the interior of a means of locomotion, on the basis of radio transmission over short distances and for monitoring the interior, particularly for detecting movements by objects in the interior, **characterized in that** the data and information interchange and also the interior monitoring make joint use of a microwave transmission unit (10) for transmitting radio signals and of a microwave reception unit (20) for receiving radio signals.

6. Method according to Claim 5, **characterized by** the following steps:
(a) microwaves are transmitted using at least one microwave transmission unit (10);
(b) the microwaves reflected and/or scattered in the interior, particularly at an object (200) moving in the interior, are received using at least one microwave reception unit (20);
(c.1) the received microwaves are evaluated, in particular the received microwaves are compared and correlated with the transmitted microwaves, and
(c.2) at least one notification signal, particularly at least one alarm signal sent via at least one, in particular serial or in particular wireless, data line (40) to at least one signal installation (50), is triggered when the pattern of the received microwaves differs from the pattern of the transmitted microwaves by more than a particular degree,
using at least one evaluation unit (30).

7. Method according to Claim 6, **characterized in that** the data and information are interchanged on up to approximately 79 channels and also the notification signal is triggered on these channels of which there are up to approximately 79.

8. Method according to Claim 6 or 7, **characterized in that** both when interchanging the data and information and when triggering the notification signal a change of channel occurs (known as "frequency hopping") at a frequency of up to approximately 1.6 kilohertz.

9. Method according to at least one of Claims 6 to 8, **characterized in that** the notification signal is triggered
- through interruption of the data line (40) between the evaluation unit (30) and the signal installation (50) and/or
- by at least one sensor unit (90), particularly by at least one inclination sensor unit.

10. Method according to at least one of Claims 5 to 9, **characterized by** a pulsed mode, particularly by a pulse echo mode or by operation on the basis of the Doppler principle.

## Revendications

1. Circuit intégré (100) prévu pour être disposé dans un habitacle, en particulier dans l'habitacle d'un moyen de locomotion, conçu pour l'échange de données et d'informations, basé sur la transmission radio sur de courtes distances, avec au moins un appareil de traitement de données (60) ou appareil de télécommunication (70) pouvant fonctionner dans l'habitacle, et conçu également pour la surveillance de l'habitacle, en particulier pour la détection d'objets en mouvement dans l'habitacle,
**caractérisé en ce que**
il est prévu une utilisation commune d'une unité d'émission de micro-ondes (10) pour l'émission de signaux radio et d'une unité de réception de micro-ondes (20) pour la réception de signaux radio par l'échange de données et d'informations ainsi que par la surveillance de l'habitacle.

2. Circuit (100) selon la revendication 1,
**caractérisé en ce que**
le circuit (100) présente
- au moins une unité d'émission de micro-ondes (10) pour l'émission de micro-ondes,
- au moins une unité de réception de micro-ondes (20) pour la réception des micro-ondes réfléchies et/ou diffusées dans l'habitacle, en particulier au niveau d'un objet (200) mobile dans l'habitacle,
- au moins une unité d'exploitation (30), pour l'exploitation des micro-ondes reçues, en particulier pour la comparaison et la corrélation des micro-ondes reçues avec les micro-ondes émises, et
- pour le déclenchement d'au moins un signal de notification, en particulier d'au moins un signal d'alarme dirigé, via au moins un ligne de données (40), notamment en série ou sans fil, vers au moins un système de signalisation (50), lorsque l'échantillon des micro-ondes reçues diffère d'une valeur donnée de l'échantillon des micro-ondes émises.

3. Circuit (100) selon la revendication 2,
**caractérisé en ce que**
le dispositif de signalisation (50) a la forme d'au moins un système d'alarme antivol.

4. Circuit (100) selon au moins l'une des revendications 1 à 3,
**caractérisé en ce que**
- la fonction de l'échange des données et des informations avec l'au moins un appareil de traitement des données (60) ou appareil de télécommunication (70) est activée dans l'état de fonctionnement du moyen de locomotion et/ou dans l'état ouvert du moyen de locomotion, et
- la fonction de surveillance de l'habitacle, en particulier la détection de d'objets en mouvement dans l'habitacle, est activée dans l'état de repos du moyen de locomotion et/ou dans l'état fermé du moyen de locomotion.

5. Procédé permettant l'échange de données et d'informations, basé sur une transmission radio sur de courtes distances, avec au moins un appareil de traitement de données (60) ou appareil de télécommunication (70) pouvant fonctionner dans un habitacle, en particulier dans l'habitacle d'un moyen de locomotion, et permettant également la surveillance de l'habitacle, notamment la détection d'objets en mouvement dans l'habitacle,
**caractérisé en ce que**
l'échange de données et d'informations ainsi que la surveillance de l'habitacle utilisent conjointement une unité d'émission de micro-ondes (10) pour l'émission de signaux radio et une unité de réception de micro-ondes (20) pour la réception de signaux radio.

6. Procédé selon la revendication 5,
**caractérisé par**
les étapes suivantes :
(a) émission de micro-ondes au moyen d'au moins une unité d'émission de micro-ondes (10) ;
(b) réception des micro-ondes réfléchies et/ou diffusées dans l'habitacle, en particulier au niveau d'un objet (200) mobile dans l'habitacle, au moyen d'au moins une unité de réception de micro-ondes (20) ;
(c.1) exploitation des micro-ondes reçues, en particulier comparaison et corrélation des micro-ondes reçues avec les micro-ondes émises, et
(c.2) déclenchement d'au moins un signal de notification, en particulier d'au moins un signal d'alarme dirigé, via au moins une ligne de données (40) en particulier en série ou sans fil, vers au moins un système de signalisation (50), lorsque l'échantillon des micro-ondes reçues diffère d'une valeur donnée de l'échantillon des micro-ondes émises,
au moyen d'une unité d'exploitation (30).

7. Procédé selon la revendication 6,
**caractérisé en ce que**
les données et les informations sont échangées sur 79 canaux environ au maximum et le signal de notification est déclenché sur ces 79 canaux environ au maximum.

8. Procédé selon la revendication 6 ou 7,
**caractérisé en ce que**
lors de l'échange de données et d'informations, ainsi que lors du déclenchement du signal de notification, un changement de canal (appelé « frequency hopping », ou « saut de fréquence ») se produit avec une fréquence pouvant atteindre environ 1,6 kilohertz.

9. Procédé selon au moins l'une des revendications 6 à 8,
**caractérisé en ce que**
le signal de notification est déclenché
- par l'interruption de la ligne de données (40) entre l'unité d'exploitation (30) et le système de signalisation (50) et/ou
- par au moins une unité de détection (90), en particulier par au moins un clinomètre.

10. Procédé selon au moins l'une des revendications 5 à 9,
**caractérisé par**
un fonctionnement par impulsions, en particulier un fonctionnement par impulsions à écho, ou un fonctionnement conformément au principe Doppler.
